# NOUVEAU FASCICULE DE BREVET EUROPEEN

(11) **EP 0 107 174 B2**
(45) Date de publication et mention de la décision concernant l'opposition: **03.02.1993**
(45) Mention de la délivrance du brevet: 01.02.1989
(21) Numéro de dépôt: 83110404.7
(22) Date de dépôt: 19.10.1983
(51) Int. Cl.: A47J 31/08

(54) **Cornet-filtre, en particulier pour infusion de café**
Filtertüte, insbesondere zur Kaffeezubereitung
Filter cone, especially for brewing coffee

(30) Priorité: 22.10.1982 FR 8217723
(43) Date de publication de la demande: 02.05.1984
(73) Titulaire: MOULINEX S.A., 75008 Paris (FR)
(72) Inventeur: Bisson, Michel, F-61000 Alencon (FR)
(74) Mandataire: May, Hans Ulrich, Dr.

(56) Documents cités:
- DE-C- 640 946
- FR-A- 1 478 980
- FR-A- 2 436 673

## Description

L'invention se rapporte aux cornets-filtres en papier, en particulier pour infusion de café, qui se présentent à plat selon un contour de forme générale trapézoïdale avec une arête de fond, deux arêtes latérales rectilignes divergentes, et un bord d'ouverture.

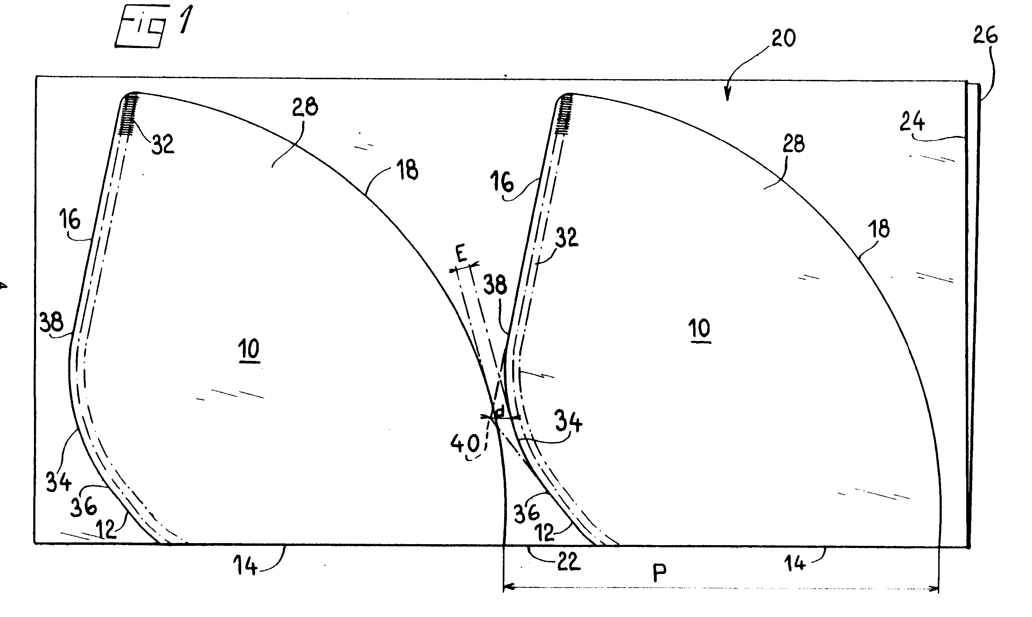

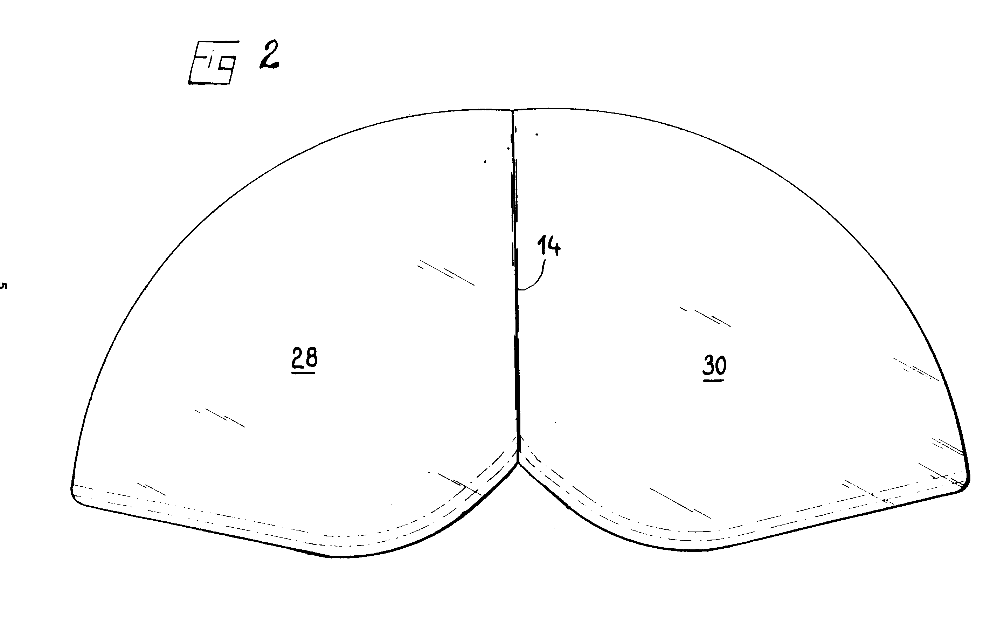

Un cornet-filtre de ce genre a été décrit, par exemple, dans le brevet allemand DE 640 946, en référence aux figures 1 et 2 de ce brevet.

Selon un procédé connu, ces cornets sont formés en série par découpage dans une bande de papier filtrant pliée selon son axe longitudinal médian pour obtenir deux feuillets superposés, l'une desdites arêtes latérales de chaque cornet étant formée par ledit pli médian, et ledit découpage étant effectué sur la partie restante du contour de chaque cornet pour former respectivement dans les deux dits feuillets les deux parois opposées du cornet, ces parois étant en outre unies l'une à l'autre par une bordure d'assemblage, obtenue par exemple par gaufrage, qui s'étend le long de l'autre arête latérale et le long de l'arête de fond de chaque cornet.

Dans les cornets-filtres connus de ce genre l'arête de fond est rectiligne et se raccorde donc par un angle à chaque arête latérale. Dans d'autres cornets-filtres connus, l'arête de fond rectiligne se raccorde par un angle à l'arête latérale formé par ledit pli, tandis que l'arête de fond, dans sa région adjacente à l'autre arête latérale, présente une forme curviligne dont la concavité est tournée vers le bord d'ouverture, cette partie curviligne se raccordant tangentiellement à ladite autre arête latérale rectiligne.

Les cornets-filtres ainsi formés connus présentent une arête de fond qui a la forme rectiligne surtou- te sa longueur ou au moins sur la plus grande partie de sa longueur, et qui, de ce fait, repose dans l'usage de façon régulière sur l'arête de fond rectiligne correspondante du support du filtre. Ainsi, la bordure d'assemblage du cornet-filtre s'étendant selon l'arête de fond est soumise à une pression régulièrement répartie lors de son usage.

Lorsque les cornets-filtres sont découpés en série, l'un derrière l'autre, dans la même bande de papier selon le procédé exposé ci-dessus, la saillie formée par cet angle ou même par ladite partie curviligne à l'arrière de chaque découpe oblige à utiliser pour chaque cornet une longueur de papier relativement grande se traduisant par des déchets importants.

L'invention a pour but de réduire, de manière non négligeable, les déchets résultant des chutes de papier après découpage.

Un cornet-filtre selon l'invention est caractérisé en ce que ladite partie curviligne de son arête de fond présente la forme d'un secteur de cercle s'étendant depuis la zone centrale de l'arête de fond jusqu'au point de tangence avec ladite autre arête latérale rectiligne.

Ainsi, lors de l'opération de découpage, la saillie formée à l'arrière de chaque découpage est, en quelque sorte, rognée ou amoindrie ce qui permet de réduire quelque peu le pas entre deux cornets successifs, c'est-à-dire la longueur de papier nécessaire à la confection de chacun, sans pour autant réduire pratiquement leur capacité interne, et sans nuire à leur usage facile et positionnement correct.

Les caractéristiques et avantages de l'invention ressortiront d'ailleurs de la description qui va suivre, à titre d'exemple, en référence aux dessins annexés dans lesquels :
la figure 1 représente une bande de papier filtrant pliée dans laquelle sont réalisés des cornets selon l'invention; la figure 2 représente, à fin d'illustration, un cornet selon l'invention tel qu'il se présenterait si, après l'opération de découpage, et avant l'opération d'assemblage par gaufrage, on déployait dans un plan le flan de papier qui le constitue.

Les cornets-filtres 10 représentés à la figure 1 se présentent à plat selon un contour de forme générale trapézoïdale avec une arête de fond 12, deux arêtes latérales rectilignes divergentes 14 et 16, et un bord d'ouverture 18.

Ces cornets sont formés en série par découpage dans une bande de papier filtrant 20 pliée selon son axe longitudinal médian 22 pour obtenir deux feuillets superposés 24 et 26. L'une des arêtes latérales 14 de chaque cornet est formée par le pli médian 22 ; le découpage est effectué sur la partie restante du contour de chaque cornet pour former respectivement dans les deux feuillets 24 et 26 les deux parois opposées 28 et 30 de ce cornet ; ces parois sont unies l'une à l'autre par une bordure d' assemblage 32 s'étendant le long de l'autre arête latérale 16 et le long de l'arête de fond 12 ; cette bordure d'assemblage est obtenue, par exemple, par gaufrage du papier selon une technique usuelle.

L'arête de fond 12 présente, dans sa région adjacente à l'arête latérale 16, une forme curviligne dont la concavité est tournée vers le bord d'ouverture 18, et qui se raccorde tangentiellement à l'arête latérale 16. Selon la présente invention, cette partie curviligne 34 de l'arête de fond 12 présente la forme d'un secteur de cercle qui s'étend depuis la zone centrale 36 de l'arête de fond 12 jusqu'au point de tangence 38 avec l'arête 16.

Comme on le voit sur la figure 1, lors de l'opération de découpage on laisse entre deux cornets successifs un espace E compatible avec une bonne découpe sans déchirure du papier. Sur cette figure, on a représenté par la référence P le pas entre deux cornets successifs, c'est-à-dire la longueur de la bande 20 de papier nécessaire à la confection de chaque cornet.

Comme on le comprend, si l'arête de fond 12, au lieu d'être curviligne, avait été rectiligne, comme par exemple dans le brevet allemand DE 640 946, une saillie angulaire serait apparue à l'arrière de chaque découpe comme indiqué en traits interrompus par la référence 40 de la figure 1, et il aurait alors fallu augmenter le pas P d'une quantité égale à la distance axiale d entre la pointe 40 et la partie curviligne 34, étant bien entendu qu'il aurait encore fallu conserver un espace E entre la pointe 40 et le bord 18 du cornet suivant.

L'invention permet donc une économie de papier que l'on peut évaluer à un pourcentage égal au rapport d/P, c'est-à-dire de quelques pour cent. Cette économie n'est nullement négligeable dans le cas d'une fabrication de cornets-filtres en très grande série.

## Revendications

1. Cornet-filtre (10), en particulier pour infusion de café, se présentant à plat selon un contour de forme générale trapézoïdale avec une arête de fond (12), deux arêtes latérales rectilignes divergentes (14 et 16), et un bord d'ouverture (18), ce cornet étant formé par découpage d'une bande de papier filtrant (20) pliée selon son axe longitudinal médian (22) pour obtenir deux feuillets superposés (24 et 26), l'une desdites arêtes latérales (14) du cornet étant formée par ledit pli médian (22), et ledit découpage étant effectué sur la partie restante dudit contour pour former respectivement dans les deux dits feuillets (24 et 26) les deux parois opposées (28 et 30) dudit cornet, ces parois étant en outre unies l'une à l'autre par une bordure d'assemblage (32) s'étendant le long de l'autre arête latérale (16) et le long de l'arête de fond (12), l'arête de fond (12) présentant dans sa région adjacente à ladite autre arête latérale (16) une forme curviligne dont la concavité est tournée vers le bord d'ouverture, et ladite partie curviligne (34) de l'arête de fond (12) se raccordant tangentiellement à ladite autre arête latérale rectiligne (16), caractérisé en ce que ladite partie curviligne (34) présente la forme d'un secteur de cercle s'étendant depuis la zone centrale (36) de l'arête de fond (12) jusqu'au point (38) de tangence avec ladite autre arête latérale rectiligne (16).

## Claims

1. A filter cone (10), in particular for the infusion of coffee, being flat with a generally trapezoidal shape having a bottom edge (12), two divergent rectilinear lateral edges (14 and 16), and an opening edge,(18), this cone being formed by cutting out from a band of filter paper (20) folded along its median longitudinal axis (22) to obtain two superimposed leaves (24 and 26), one of the said la- terial edges (14) of the one being formed by the said median fold (22) and the said cutting out being performed on the remaining part of the said shape to form the two opposite walls (28 and 30) of the said cone in the two said leaves (24 and 26) respectively, these walls in addition being united to one another by a joining border (32) extending along the other lateral edge (16) and along the bottom edge (12), said bottom edge (12), in its region adjacent to the said other lateral edge (16), having a curvilinear shape the concavity of which is turned towards the opening edge (18), and said curvilinear part (34) of the bottom edge (12) meeting the other rectilinear lateral edge (16) tangentially, characterized in that the said curvilinear part (34) has the shape of a sector of a circle extending from the central zone (36) of the bottom edge (12) as far as the point of tangency (38) with the said other rectilinear lateral edge (16).

## Patentansprüche

1. Filtertüte (10), besonders zur Kaffeezubereitung, die in flachem Zustand einen im ganzen trapezförmigen Umriß mit einer Bodenkante (12), zwei divergierenden geraden Seitenkanten (14 und 16) und einen Öffnungsrand (18) zeigt, wobei diese Filtertüte durch Ausstanzen einer Filterpapierbahn (20), die gemäß ihrer Längsmittelachse (22) gefaltet ist, gebildet wird, um zwei übereinanderliegende Blätter (24 und 26) zu erhalten, wobei die eine der Seitenkanten (14) der Filtertüte von der Mittelfalte (22) gebildet ist und das Ausstanzen über den restlichen Teil des Umrisses erfolgt, um jeweils in den zwei Blättern (24 und 26) die zwei gegenüberliegenden Wände (28 und 30) der Filtertüte zu bilden und wobei diese Wände außerdem durch eine Verbindungsborte (32), die sich längs der anderen Seitenkante (16) und längs der Bodenkante (12) erstreckt, miteinander verbunden sind, wobei die Bodenkante (12) in ihrem der anderen Seitenkante (16) benachbarten Bereich eine gebogene Form aufweist, deren Höhlung dem Öffnungsrand zugewandt ist und der gebogene Teil (34) der Bodenkante (12) sich tangential an die andere gerade Seitenkante (16) anschließt, dadurch gekennzeichnet, daß der gebogene Teil (34) die Form eines Kreissektors aufweist, der sich vom Mittelbereich (36) der Bodenkante (12) bis zum tangentialen Berührungspunkt (38) mit der anderen geraden Seitenkante (16) erstreckt.
